# EUROPEAN PATENT SPECIFICATION

(11) **EP 2 200 128 B1**
(45) Date of publication and mention of the grant of the patent: **27.01.2016**
(21) Application number: 09177260.8
(22) Date of filing: 26.11.2009
(51) Int. Cl.: H01R 13/447, H01R 13/52, H01R 13/60, H01R 27/02, H02G 3/18, A47B 21/06

(54) **Surface mounted connection tower**
Auf der Oberfläche montierter Anschlussturm
Tour de connexion assemblé en surface

(30) Priority: 19.12.2008 SE 0850155
(43) Date of publication of application: 23.06.2010
(73) Proprietor: Schneider Electric Industries SAS, 92500 Rueil-Malmaison (FR)
(72) Inventor: Dahl, Sture, 611 44 Nyköping (SE); Eriksson, Staffan, 611 56 Nyköping (SE); Sundin, Lars, 613 37 Oxelösund (SE)
(74) Representative: Groth & Co. KB

(56) References cited:
- WO-A1-2006/034513
- DE-A1-102007 051 053
- US-A- 3 646 244
- US-A- 3 794 956
- US-B1- 7 163 409

## Description

### Technical Field

The present invention relates to a device to connect an electric apparatus to a service post that can be hidden under a surface in one position and be expanded from the surface in another position.

### Background of the Invention

By US 6,416,336, a service post for electric connections is previously known, which is mounted in a tabletop in such a way that the service post is displaceable from an essentially hidden lowered position to an exposed pulled-up position, in which latter position all connections of the service post can be used. This previously known service post can after connection of plugs again be displaced to a lowered position, wherein the connected electric cables are allowed to come up from the tabletop via a spring-loaded tippable cover plate, which can be tipped around an axis parallel to the diameter of the cover plate.

When electric cables are connected and the service post is in the lowered position, this means that the cover plate is tipped in such a way that it is raised in one side thereof and tipped-down in the opposite side thereof, wherein almost the entire hole for the service post is open so that waste material and moisture may come down into the hole.

The service post according to this known publication is pulled up from the tabletop by the cover plate being tipped and used as a handle.

From US 3,646,244 it is known an adjustable floor receptacle mount that includes a housing movable within a stationary casing fitted into a circular opening in a concrete floor. Themount is provided with a cap which provides a handle by which the housing can be quickly pulled out of the casing in the floor when it is desired to use the electrical services provided by the receptacles on the sides of the housing.

From US 7,163,409 it is known a modular integrated socket apparatus mounted in a table and comprising a shell, a pop-up structure, an adapter module, a connector base and a coupling device. When in use, the shell and the adapter module are located higher than the table by use of the pop-up structure and the coupling device.

From US 3,794,956 it is known a retractable floor outlet assembly formed of telescopic inner and outer members. The inner member being movable between an operative extended position and an inoperative retracted position.

From DE 102007051053 it is also known a pop-up structure which in its operative extended position serves as a supply for electrical equipment while being inoperative in a retracted position.

From WO 2006/034513 it is known a power supply structure comprising an elongate casing carrying power outlet sockets. The structure is upwardly and downwardly displaceable between a raised position and a lowered position in a mounting structure. The power supply structure includes a cap structure at the upper end of the casing that includes a seal and includes means for latching the casing in its lowered position to exert a downward force on the casing and pull the seal against the top surface of a panel in which the structure is fitted.

### The Object of the Invention

The object of the present invention is to provide an improved service post or connection tower mounted in a plate and that solves the above-mentioned problems.

Furthermore, the object of the invention is to provide an improved sealing between the connection tower and the plate in which the connection tower is mounted when electric cables are connected and then particular from the side of the plate from which the connection tower is pushed out.

Another object of the present invention is to provide an improved manipulation of the different positions of a service post.

### Summary of the Invention

By the present invention, as this is set forth in the independent claim, the above-mentioned objects are met wherein the mentioned disadvantages have been eliminated. Suitable embodiments of the invention are defined in the dependent claims.

The invention concerns a surface-mounted connection tower to which electric consumers can be connected. The connection tower is formed axially movable, preferably along guide rails, in an opening of a mounting ring, which is fixedly connected in a hole in a preferably plane plate having an outwardly/upwardly facing surface, preferably a tabletop. In the following, "axial/axially" should be understood as a direction parallel to an imaginary centre axis of said opening. The connection tower is movable in relation to the surface for motion between a projected position and an inserted position. The connection tower is provided with electric connection devices, such as mains plugs, telephone connections and data networks, to which the corresponding cables are connectable, from either side of the plane surface. The connection tower with the cables connected is displaceably arranged in the mounting ring between a position being projected from the surface and a position being inserted in relation to the surface. Furthermore, an operating member is mounted to the projectable end of the connection tower and that is formed to at least partly act as an operation handle for the displacement of the connection tower. In addition, in the inserted position of the connection tower, the operating member connects to an elastic seal that together with the operating member forms a cover member that covers the opening and the outer edge of which is formed to entirely or partly sealingly abut against the mounting ring.

In one embodiment of the invention, the seal is provided with a ring-shaped cover part in which the operating member is centrally placed. In this connection, the operating member is rectilinearly movable in the axial direction in relation to the connection tower as well as to the ring-shaped cover part, locking of the connection tower in an inserted position and unlocking of the connection tower from said position, respectively, being arranged to be operated by the motion of said operating member.

According to one embodiment of the invention, the operating member assumes a projected position in relation to the connection tower after said unlocking, so as to form the operation handle.

According to one embodiment of the invention, the cover member and the operating member form a common surface that is either plane or slightly convex in relation to the plane surface.

According to one embodiment of the invention, the plane surface is a tabletop.

Within the scope of the claims, the invention may be varied to comprise other embodiments than those shown and described in the application.

### Brief Description of the Drawings

Now, the invention will be described in more detail, reference being made in connection with the accompanying drawing figures.
- Figure 1: shows a side view of a connection tower according to the invention.
- Figure 2: shows a perspective view of a connection tower according to the invention.
- Figure 3: shows a section view through the operating part of the connection tower according to the invention in a home position.
- Figure 4: shows a section view through the operating part of the connection tower according to the invention in a raised position.

### Description of the Invention

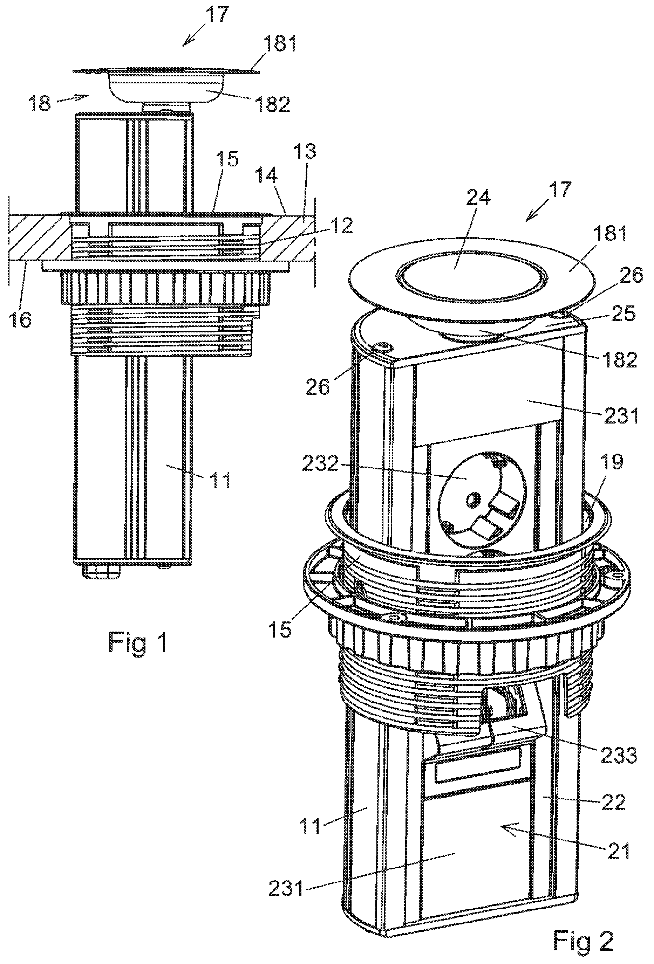

Figure 1 shows a connection tower 11 that is mounted in a circular hole 12 in a preferably plane plate 13 having an outwardly/upwardly facing surface 14. In the hole 12, a mounting ring 15 is attached that sealingly abuts against the outwardly/upwardly facing surface as well as against an inwardly/downwardly facing surface 16. In the outwardly/upwardly facing end thereof, the connection tower 11 is provided with a cover member 17 that comprises an elastic seal 18 placed in the cover member. The elastic seal comprises a peripherally situated ring-shaped cover part 181 and a centrally situated part 182.

Figure 2 shows in perspective the connection tower 11, which is mounted in rails and axially displaceable in an opening 19 in the mounting ring 15. The connection tower 11 is formed with an elongate mounting opening 21 hidden under a cover lid 231, which mounting opening is limited laterally by profile rails 22 formed to carry the cover lid 231, sockets for consumers such as mains voltage sockets 232, computer sockets 233 and telephone connections. All these sockets, plane or angled, and cover lids have the same connection against the profile rails in such a way that they can be displaced in the same and be placed in optional position along the mounting opening 21. In the position shown in the figure, the connection tower is partly projected but on the way to be pushed in, the surface of the entire cover member 17 being essentially plane.

Figure 2 shows furthermore that the cover member 17 centrally is provided with an operating member 24 in the form of a circularly formed button. Around the operating member 24, the ring-shaped cover part 181 is placed, which transforms into the centrally situated part 182. The cover member also comprises a fastening plate 25, which is mounted to the projecting end of the connection tower by screws 26.

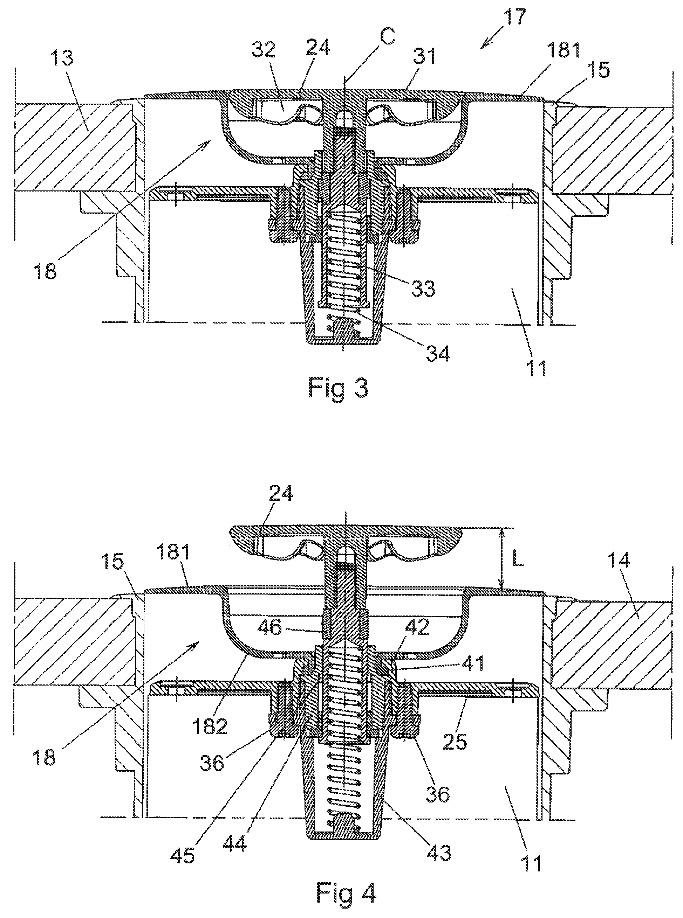

Figure 3 shows a section through the cover member 17 in a position wherein the schematically shown connection tower 11 is in an inserted position, the operating member 24 being arranged flush with the ring-shaped cover part 181 of the elastic seal 18. The cover part 181 also abuts against the schematically shown mounting ring 15 that is attached in the plane plate 13. The operating member 24 is formed with a surface 31 being plane or slightly bulging on the outside as well as is reinforced on the inside with a number of radially arranged wings 32. By this design, a very rigid operating member is obtained. The operating member 24 is axially movable along an imaginary centre axis C and is arranged to, by a helical spring 34, actuate a spring housing 33 connected to the operating member to assume, upon a depression of the operating member from the position in the figure, the position shown in Figure 4.

In Figure 4, the operating member 24 has, by force actuation, been displaced the distance "L", where 10 mm ≤ L ≤ 40 mm, outward from the ring-shaped cover part 181 and in this connection formed a handle to axially move the entire connection tower 11. The figure also shows that the centrally situated part 182 of the seal 18 extends in under the entire operating member 24 and is attached by a collar 41 to a circular fold 42 of the fastening plate 25. Centrally in the mounting ring, a spring seat 43 is connected by means of screws 36, said spring housing 33 being movable in the spring seat in such a way that a ratchet mechanism 44, 45, 46 of the operating member by axial displacement and turning, respectively, is actuated for retracted/extended position of the operating member. The ratchet mechanism reminds in its function of the ratchet mechanism in a conventional ballpoint pen.

From the position shown in Figure 4, the handle formed of the operating member 24 can be gripped and the entire connection tower 11 be pulled out in relation to the mounting ring 15 from the surface 14 all the way to an end position, not shown, in which all connections mounted in the mounting opening 21 can be reached.

By the fact that the ring-shaped cover part 181 is elastic, the same can be bent away in such a way that connected electric cables and wires can pass between the mounting ring 15 and the deflected ring-shaped cover part 181. By selection of the coefficient of elasticity, the deformation of the cover part 181 can be limited to a local area around the cables/wires while the remaining periphery of the cover part 181 remains sealingly against the mounting ring. To the extent the sealing function would be deteriorated, it is easy to replace the entire seal by unscrewing the operating member 24 from the spring housing 33, loosen the spring seat with the ratchet mechanism from the fastening plate 25 and pull off the worn seal from the fold 42 and install a new seal.

## Claims

1. Surface-mounted connection tower (11) that is formed axially movable in an opening (19) in a mounting ring (15) that is fixedly connected in a hole (12) in a preferably plane plate (13) having an outwardly/upwardly facing surface (14), the connection tower (11) being movable in relation to the surface (14) for motion between a projected position and an inserted position and that the connection tower (11) is provided with electric connection devices (232, 233) to which cables are connectable, an operating member (24) is mounted to the projectable end of the connection tower (11) and formed to at least partly act as an operation handle for the displacement of the connection tower (11), **characterized in that** the operating member (24), in the inserted position of the connection tower (11), connects to an elastic seal (18) formed with a ring-shaped cover part (181) that together with the operating member (24) forms a cover member (17) that covers the opening and the outer edge of which is formed to entirely or partly sealingly abut against the mounting ring (15) wherein the ring shaped cover part (181) is elastic for letting connected cables from the connection tower (11) through the mounting ring (15) even when the connection tower (11) is in the inserted position.

2. Connection tower according to claim 1, **characterized in that** the operating member (24) is centrally placed in the ring-shaped cover part (181), the operating member (24) being rectilinearly movable in the axial direction in relation to the connection tower (11) as well as the ring-shaped cover part (181), locking of the connection tower (11) in an inserted position and unlocking of the connection tower (11) from said position, respectively, being arranged to be operated by the motion of said operating member (24).

3. Connection tower according to claim 2, **characterized in that** the operating member (24) assumes a projected position in relation to the connection tower (11) after said unlocking, so as to form the operation handle.

4. Connection tower according to any one of claims 1-3, **characterized in that** the cover member (17) and the operating member (24) form a common surface that is either plane or slightly convex in relation to the outwardly/upwardly facing surface (14).

5. Connection tower according to any one of claims 1-4, **characterized in that** the outwardly/upwardly facing surface (14) is a tabletop.

## Patentansprüche

1. Auf der Oberfläche montierter Anschlussturm (11), der axial beweglich in einer Öffnung (19) in einem Befestigungsring (15) ausgebildet ist, wobei der Befestigungsring (15) in einem Loch (12) in einer vorzugsweise planaren Platte (13) mit einer nach außen/nach oben weisenden Fläche (14) fest angeschlossen ist, wobei der Anschlussturm (11) zur Bewegung zwischen einer herausgeschobenen Position und einer hineingeschobenen Position bezüglich der Fläche (14) bewegbar ist und der Anschlussturm (11) mit elektrischen Anschlussvorrichtungen (232, 233) versehen ist, an die Kabel angeschlossen werden können, ein Bedienelement (24) an dem herausschiebbaren Ende des Anschlussturms (11) befestigt und dazu ausgebildet ist, zumindest teilweise als ein Bediengriff zum Verschieben des Anschlussturms (11) zu dienen, **dadurch gekennzeichnet, dass** das Bedienelement (24) bei der hineingeschobenen Position des Anschlussturms (11) mit einer elastischen Dichtung (18) verbunden ist, die mit einem ringförmigen Abdeckteil (181) ausgebildet ist, das zusammen mit dem Bedienelement (24) ein Abdeckelement (17) bildet, das die Öffnung abdeckt und deren Außenrand zum vollständig oder teilweise abdichtenden Anliegen gegen den Befestigungsring (15) ausgebildet ist, wobei der ringförmige Abdeckteil (181) elastisch ist, um angeschlossene Kabel vom Anschlussturm (11) durch den Befestigungsring (15) durchzulassen, selbst wenn sich der Anschlussturm (11) in der hineingeschobenen Position befindet.

2. Anschlussturm nach Anspruch 1, **dadurch gekennzeichnet, dass** das Bedienelement (24) zentral in dem ringförmigen Abdeckteil (181) platziert ist, wobei das Bedienelement (24) in der Axialrichtung bezüglich des Anschlussturms (11) sowie des ringförmigen Abdeckteils (181) geradlinig bewegbar ist, wobei das Verriegeln des Anschlussturms (11) in einer hineingeschobenen Position bzw. das Entriegeln des Anschlussturms (11) aus dieser Position so gestaltet ist, dass es durch die Bewegung des Bedienelements (24) erfolgt.

3. Anschlussturm nach Anspruch 2, **dadurch gekennzeichnet, dass** das Bedienelement (24) nach dem Entriegeln eine herausgeschobene Position bezüglich des Anschlussturms (11) einnimmt, um den Bediengriff zu bilden.

4. Anschlussturm nach einem der Ansprüche 1-3, **dadurch gekennzeichnet, dass** das Abdeckelement (17) und das Bedienelement (24) eine gemeinsame Fläche bilden, die entweder planar oder leicht konvex bezüglich der nach außen/nach oben weisenden Fläche (14) ist.

5. Anschlussturm nach einem der Ansprüche 1-4, **dadurch gekennzeichnet, dass** es sich bei der nach außen/nach oben weisenden Fläche (14) um eine Tischplatte handelt.

## Revendications

1. Tour de connexion (11) montée en surface, formée de manière déplaçable axialement dans une ouverture (19) dans une bague de montage (15) qui est connectée de manière fixe dans un trou (12) dans une plaque de préférence plane (13) ayant une surface tournée vers l'extérieur/vers le haut (14), la tour de connexion (11) pouvant être déplacée par rapport à la surface (14) de manière à se déplacer entre une position en saillie et une position insérée et la tour de connexion (11) étant pourvue de dispositifs de connexion électrique (232, 233) auxquels des câbles peuvent être connectés, un organe fonctionnel (24) étant monté sur l'extrémité pouvant être mise en saillie de la tour de connexion (11) et étant formé de manière à agir au moins en partie en tant que poignée fonctionnelle pour le déplacement de la tour de connexion (11), **caractérisée en ce que** l'organe fonctionnel (24), dans la position insérée de la tour de connexion (11), se raccorde à un joint élastique (18) formé avec une partie de recouvrement de forme annulaire (181) qui forme conjointement avec l'organe fonctionnel (24) un organe de recouvrement (17) qui recouvre l'ouverture et dont le bord extérieur est formé de manière à buter entièrement ou en partie de manière étanche contre la bague de montage (15), la partie de recouvrement le forme annulaire (181) étant élastique de manière à permettre le passage de câbles connectés de la tour de connexion (11) à travers la bague de montage (15) même lorsque la tour de connexion (11) est dans la position insérée.

2. Tour de connexion selon la revendication 1, **caractérisée en ce que** l'organe fonctionnel (24) est placé centralement dans la partie de recouvrement de forme annulaire (181), l'organe fonctionnel (24) pouvant être déplacé en ligne droite dans la direction axiale par rapport à la tour de connexion (11) ainsi que par rapport à la partie de recouvrement de forme annulaire (181), un verrouillage de la tour de connexion (11) dans une position insérée et un déverrouillage de la tour de connexion (11) de ladite position, respectivement, étant prévus pour être effectués par le biais du mouvement dudit organe fonctionnel (24).

3. Tour de connexion selon la revendication 2, **caractérisée en ce que** l'organe fonctionnel (24) adopte une position en saillie par rapport à la tour de connexion (11) après ledit déverrouillage de manière à former la poignée fonctionnelle.

4. Tour de connexion selon l'une quelconque des revendications 1 à 3, **caractérisée en ce que** l'organe de recouvrement (17) et l'organe fonctionnel (24) forment une surface commune qui est soit plane soit légèrement convexe par rapport à la surface tournée vers l'extérieur/vers le haut (14).

5. Tour de connexion selon l'une quelconque des revendications 1 à 4, **caractérisée en ce que** la surface tournée vers l'extérieur/vers le haut (14) est un dessus de table.
